# EUROPÄISCHE PATENTANMELDUNG

(11) **EP 1 089 237 A1**
(43) Veröffentlichungstag der Anmeldung: **04.04.2001**
(21) Anmeldenummer: 00250330.8
(22) Anmeldetag: 29.09.2000
(51) Int. Cl.: G07B 15/02, G07F 7/08, G07C 9/00

(54) **Verfahren und Anordnung zum Betreiben von Lesegeraeten fuer Chipkarten fuer den oeffentlichen Nahverkehr**

(30) Priorität: 01.10.1999 DE 19947503
(71) Anmelder: SIEMENS AKTIENGESELLSCHAFT, 80333 München (DE)
(72) Erfinder: Retka, Manfred, 13437 Berlin (DE)

(57) **Zusammenfassung**

Die Erfindung bezieht sich auf ein Verfahren zum Erzeugen eines Datensignals (D), das eine von einem Fahrgast mit einem öffentlichen Verkehrsmittel (5) zurückgelegte Fahrstrecke kennzeichnet, bei dem eine Chipkarte bei Fahrtbeginn mit einer ersten Leseeinrichtung (20) und bei Fahrtende auf elektromagnetischem Wege ein weiteres Mal ausgelesen wird und bei dem das Datensignal unter Heranziehung der Leseergebnisse gebildet wird.

Um ein solches Verfahren für den Fahrgast besonders einfach zu gestalten und um eine große Benutzerfreundlichkeit zu erreichen, ist vorgesehen, daß das Kartenkennzeichen bei Fahrtende durch eine im Ausgangsbereich des Verkehrsmittels (5) angebrachte, zweite Leseeinrichtung (40) selbsttätig und eigeninitiert erfaßt wird, sobald der Fahrgast den Ausgangsbereich (15) des Verkehrsmittels (5) passiert.

## Beschreibung

Die Erfindung bezieht sich auf ein Verfahren zum Erzeugen eines Datensignals, das eine von einem Fahrgast mit einem öffentlichen Verkehrsmittel zurückgelegte Fahrstrecke kennzeichnet, bei dem bei Fahrtbeginn mit einer ersten Leseeinrichtung mindestens ein auf einer vom Fahrgast mitgeführten und zum Zwecke des Auslesens bewußt und eigenveranlaßt in eine Datenverbindung mit der Leseeinrichtung gebrachten Chipkarte abgespeichertes Kartenkennzeichen ausgelesen wird und ein den jeweiligen Ort des Verkehrsmittels bei Fahrtbeginn angebendes erstes Ortssignal erzeugt wird, bei Fahrtende ein den jeweiligen Ort des Verkehrsmittels angebendes, zweites Ortssignal erzeugt wird und das Datensignal unter Heranziehung der beiden Ortssignale gebildet wird. Unter dem Begriff 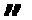 Chipkarte" werden gemäß der Erfindung dabei alle Identifikationsmedien verstanden, die entsprechende Identifikationskennzeichen tragen können; so ist es beispielsweise denkbar, die Chipkarte bzw. die Funktion der Chipkarte in Uhren, Handies, PDA (personal digital assistant) etc. zu integrieren. Unter dem Begriff Verkehrsmittel werden dabei schienengebundene Verkehrsmittel wie S-Bahn, U-Bahn oder Fernverkehrsbahn sowie schienenungebundene Verkehrsmittel wie Omnibusse etc. verstanden.

Ein derartiges Verfahren ist beschrieben in "Siemens CHIPTICKET®-System im Verkehrsverbund Rhein-Sieg" (Manfred Retka, Verkehr und Technik 1999, Heft 5, Seiten 171 bis 176). Bei diesem vorbekannten Verfahren - Check-in/Check-out-Verfahren genannt - wird eine vom Fahrgast mitgeführte Chipkarte von einer Leseeinrichtung - Secure Contactless®-Terminal genannt - ausgelesen (Check-in-Vorgang), sobald der Fahrgast die Chipkarte eigenveranlaßt zum Zwecke des Auslesens bei Fahrtbeginn in eine Ausnehmung bzw. Lesemulde der Leseeinrichtung hält; das Auslesen erfolgt dabei ausschließlich im Bereich der Lesemulde auf elektromagnetischem Wege mittels Funkwellen. Bei diesem Auslesevorgang wird mit der Leseeinrichtung mindestens ein auf der Chipkarte abgespeichertes Kartenkennzeichen erfaßt. Anschließend wird ein erstes Ortssignal erzeugt, das die Angabe des jeweiligen Ortes - also den Ort des Fahrtbeginns - kennzeichnet. Bei Fahrtende wird die Chipkarte ein zweites Mal ausgelesen, nämlich dann, wenn der Fahrgast die Chipkarte bei Fahrtende ein zweites Mal in die Lesemulde der Leseeinrichtung einführt (Check-out-Vorgang); nachdem das Kartenkennzeichen ein zweites Mal ausgelesen wurde, wird ein zweites Ortssignal gebildet, das wiederum die Angabe des jeweiligen Orts - also diesmal den Ort des Fahrtendes (Ankunftsort) - angibt. Mit diesen beiden Ortssignalen wird dann ein Datensignal gebildet, das die vom Fahrgast mit dem öffentlichen Verkehrsmittel zurückgelegte Fahrtstrecke angibt. Dieses Datensignal läßt sich dann zur Bestimmung des Fahrpreises bzw. für statistische Zwecke DV-mäßig verarbeiten und auswerten.

Der Erfindung liegt die Aufgabe zugrunde, ein Verfahren der eingangs beschriebenen Art dahingehend fortzuentwickeln, daß es einen besonders großen Nutzungskomfort bzw. eine besonders große Benutzerfreundlichkeit für den Fahrgast gewährleistet.

Diese Aufgabe wird bei einem Verfahren der eingangs beschriebenen Art erfindungsgemäß dadurch gelöst, daß das zweite Ortssignal mit einer zweiten Leseeinrichtung selbsttätig und eigeninitiert erzeugt wird, sobald der Fahrgast mit der Chipkarte das Verkehrsmittel verläßt.

Ein wesentlicher Vorteil des erfindungsgemäßen Verfahrens besteht darin, daß der Fahrgast beim Verlassen des öffentlichen Verkehrsmittels seine Chipkarte nicht ein zweites Mal in eine Datenverbindung mit der Leseeinrichtung bringen muß, da seine Chipkarte beim Verlassen des öffentlichen Verkehrsmittels automatisch erfaßt wird. Das erfindungsgemäße Verfahren gewährleistet dabei trotz der deutlichen Erhöhung der Benutzerfreundlichkeit dennoch die bereits vom vorbekannten Verfahren her bekannte hohe Zuverlässigkeit; denn bei dem erfindungsgemäßen Verfahren werden - ebenso wie bei dem vorbekannten Verfahren - ausschließlich solche Chipkarten berücksichtigt, die beim Check-In-Vorgang vom Fahrgast bewußt und eigenveranlaßt mit der ersten Leseeinrichtung in eine Datenverbindung gebracht worden sind. Andere Chipkarten, die der Fahrgast zwar bei sich führt, aber nicht benutzen will und somit nicht in eine solche Datenverbindung gebracht hat, werden bei diesem ersten Lesevorgang nicht erfaßt und somit nicht zur Bildung von Datensignalen herangezogen. Eine doppelte oder mehrfache finanzielle Belastung eines Fahrgastes, der mehrere Chipkarten bei sich führt, ist also ausgeschlossen. Zusammengefaßt besteht der Kern der Erfindung also in der Kombination zweier verschiedener Arten von Lesevorgängen, nämlich einem ersten Lesevorgang -Check-In-Vorgang genannt- , der erst ausgelöst wird, wenn der Fahrgast seine Chipkarte willentlich "auslesen" läßt, und einem zweiten Lesevorgang, der automatisch ausgelöst wird, sobald der Fahrgast das Verkehrsmittel verläßt.

Besonders einfach und damit vorteilhaft läßt sich feststellen, ob der Fahrgast mit seiner Chipkarte das Verkehrsmittel verläßt, indem als die zweite Leseeinrichtung eine im Ausgangsbereich des Verkehrsmittels angebrachte Leseeinrichtung verwendet wird, die das zweite Ortssignal erzeugt, sobald der Fahrgast mit der Chipkarte den Ausgangsbereich passiert; denn bei dieser Weiterbildung des erfindungsgemäßen Verfahrens ist lediglich im Ausgangsbereich des Verkehrsmittels eine zweite Leseeinrichtung erforderlich.

Eine andere vorteilhafte Variante des erfindungsgemäßen Verfahrens besteht darin, daß der Innenraum des Verkehrsmittels funktechnisch - beispielsweise durchgängig oder in regelmäßigen oder auch unregelmäßigen zeitlichen Abständen - auf das Vorhandensein der mit der ersten Leseeinrichtung erfaßten Chipkarte überwacht wird und das zweite Ortssignal erzeugt wird, sobald das Fehlen der Chipkarte im Innenraum festgestellt wird. Bei dieser Variante werden Fehler beim Erfassen des Fahrtendes besonders zuverlässig vermieden, da das Vorhandensein des Fahrgastes im Verkehrsmittel mehrfach kontrolliert werden kann; das zweite Ortssignal wird also erst dann erzeugt, wenn sicher feststeht, daß der Fahrgast bzw. seine Chipkarte nicht mehr im Verkehrsmittel vorhanden ist. Die funktechnische Überwachung kann mit allen üblichen Funkeinrichtungen erfolgen; beispielsweise einsetzbar ist dabei auch die OFW-Oberflächenfunktechnik.

Besonders zuverlässig läßt sich der Fahrtbeginn mit Leseeinrichtungen erfassen, die eine Ausnehmung (Schlitz, Mulde, etc.) aufweisen, da solche Leseeinrichtungen mit größer Sicherheit ausschließlich solche Chipkarten erfassen und auslesen, die vom Fahrgast in die Ausnehmung eingeführt worden sind; es wird also als vorteilhaft angesehen, wenn als erste Leseeinrichtung eine Leseeinrichtung mit einer Ausnehmung verwendet wird und das auf der Chipkarte abgespeicherte Kartenkennzeichen ausgelesen wird, sobald die Chipkarte vom Fahrgast zum Zwecke des Auslesens in die Ausnehmung der Leseeinrichtung eingeführt worden ist.

Um zu vermeiden, daß der Fahrgast finanziell geschädigt wird, wenn es zu Lesefehlern beim Verlassen des Verkehrsmittels und in Folge zur Erzeugung falscher Datensignale kommt, wird es als vorteilhaft angesehen, wenn ein weiteres Datensignal gebildet wird unter Berücksichtigung eines von einer fahrgastbetätigten Eingabeeinrichtung erzeugten dritten Ortssignals, das den vom Fahrgast als Ort des Fahrtendes bestätigten Ort kennzeichnet, indem als das weitere Datensignal ein Signal gebildet wird, das die vom Fahrgast zurückgelegte Fahrstrecke unter Berücksichtigung des vom ihm als Ort des Fahrtendes bestätigten Ortes angibt. Bei dieser Weiterbildung des erfindungsgemäßen Verfahrens hat der Fahrgast nämlich die Möglichkeit, das mit dem Ortssignal der zweiten Leseeinrichtung gebildete Datensignal zu bestätigen (falls dies beispielsweise rechtlich zum Zwecke einer automatischen Abbuchung des Fahrgeldes z. B. vom Bankkonto oder der Chip-Karte erforderlich sein sollte) oder zu korrigieren, falls das Datensignal nach seiner Ansicht einen falschen Ankunftsort kennzeichnet und somit womöglich zu einem überhöhten Fahrpreis geführt hat. Ein derartiger Lesefehler kann beispielsweise darin bestehen, daß beim Verlassen des Verkehrsmittels gar kein Lesevorgang ausgelöst wurde - beispielsweise deshalb, weil die Chipkarte lesegeräteseitig nicht detektiert wurde. Durch Eingabe des tatsächlichen Ortes des Fahrtendes kann der Fahrgast so vermeiden, daß der Endbahnhof bzw. die Endstation als Ort des Fahrtendes angesehen und der maximale Fahrpreis erhoben wird. Als Eingabeeinrichtung kann dabei z. B. die erste Leseeinrichtung oder eine andere beispielsweise im Bahnhofsbereich bzw. an einer Haltestelle angeordnete Leseeinrichtung verwendet werden. Diese Weiterbildung des erfindungsgemäßen Verfahrens kann damit auch als Check-in/Check-out-Verfahren (vgl. die eingangs genannte Literaturstelle) aufgefaßt werden, bei dem im Falle eines vom Fahrgast vergessenen Check-out-Vorgangs das Datensignal unter Heranziehung des zweiten Ortssignals - also einem selbsttätig und eigeninitiert gebildeten, den Ort des Fahrtendes bezeichnenden Signals - gebildet wird. Konkret bedeutet dies, daß der Fahrgast auch dann nicht finanziell geschädigt wird, falls er den Check-out-Vorgang vergessen sollte.

Um dabei eine mißbräuchliche Korrektur des Ankunftsortes durch den Fahrgast zu unterbinden, wird es darüber hinaus als vorteilhaft angesehen, wenn das weitere Datensignal mit den drei Ortssignalen ermittelt wird, indem als das weitere Datensignal ein Signal erzeugt wird, das den Ort des Fahrtbeginns und den vom Fahrgast als Ort des Fahrtendes bestätigten Ort kennzeichnet, sofern der vom Fahrgast als Fahrtende bestätigte Ort innerhalb eines in Abhängigkeit vorn zweiten Ortssignal vorgegebenen Ortstoleranzbereiches liegt, und indem andernfalls als das weitere Datensignal ein Fehlersignal gebildet wird, das angibt, daß die Fahrtstrecke nicht zwei-felsfrei bestimmbar ist. Gemäß dieser Fortbildung des erfindungsgemäßen Verfahrens wird nämlich der vorn Fahrgast als Ort des Fahrtendes angesehene und- bestätigte bzw. in die Eingabeeinrichtung eingegebene Ort nur dann zur Bildung des weiteren Datensignals herangezogen, wenn dieser voraussichtlich korrekt ist; davon wird ausgegangen, wenn dieser innerhalb eines Ortstoleranzbereiches liegt, der in Abhängigkeit vom geräteseitig detektierten Ort des Fahrtendes - erfaßt durch das zweite Ortssignal - vorgegeben wird. In dieser Weise läßt sich zuverlässig sicherstellen, daß nur solche Änderungen vom Fahrgast vorgenommen werden können, die plausibel sind. Unterscheidet sich der vom Fahrgast bestätigte Ort des Fahrtendes jedoch zu sehr vom geräteseitig detektierten Ankunftsort, so wird ein Fehlersignal erzeugt, das angibt, daß die vorn Fahrgast zurückgelegte Fahrstrecke nicht zweifelsfrei bestimmbar ist. Wie das für die Fahrt zu zahlende Entgelt dann vom Betreiber des öffentlichen Verkehrsmittels errechnet wird, obliegt dann seinen jeweiligen Beförderungsbedingungen.

Für den Fall eines Ausfalls der zweiten Leseeinrichtung wird es darüber hinaus als vorteilhaft angesehen, wenn bei Ausbleiben des zweiten Ortssignals das weitere Datensignal mit dem ersten Ortssignal und dem dritten Ortssignal gebildet wird; denn in dieser Weise kann trotz des Ausfalls der zweiten Leseeinrichtung die Fahrtstrecke bestimmt und der Fahrpreis ermittelt werden.

Die Erfindung bezieht sich ebenfalls auf eine Anordnung zum Erzeugen eines Datensignals, das eine von einem Fahrgast mit einem öffentlichen Verkehrsmittel zurückgelegte Fahrstrecke kennzeichnet, mit einer ersten Leseeinrichtung, die mindestens ein auf einer vom Fahrgast mitgeführten und eigenveranlaßt zum Zwecke des Auslesens bei Fahrtbeginn mit der Leseeinrichtung in eine Datenverbindung gebrachte Chipkarte abgespeichertes Kartenkennzeichen ausliest und ein den Ort des Fahrtbeginns angebendes, erstes Ortssignal erzeugt, mit einer zweiten Leseeinrichtung, die bei Fahrtende ein zweites Ortssignal erzeugt, und mit einer zumindest mit der zweiten Leseeinrichtung verbundenen Steuereinheit, die unter Heranziehung der beiden Ortssignale das Datensignal D erzeugt.

Eine solche Anordnung läßt sich ebenfalls der eingangs genannten Literaturstelle entnehmen.

Bezüglich dieser Anordnung liegt der Erfindung die Aufgabe zugrunde, diese dahingehend fortzuentwickeln, daß sie einen besonders großen Nutzungskomfort bzw. eine besonders große Benutzerfreundlichkeit für den Fahrgast gewährleistet.

Gelöst wird diese Aufgabe bei einer Anordnung der beschriebenen Art erfindungsgemäß dadurch, daß die zweite Leseeinrichtung eine Einrichtung ist, die das zweite Ortssignal selbsttätig und eigeninitiert erzeugt, sobald der Fahrgast das Verkehrsmittel verläßt.

Die Vorteile der erfindungsgemäßen Anordnung entsprechen denen des erfindungsgemäßen-Verfahrens, so daß diesbezüglich auf die obigen Ausführungen zu den Vorteilen des erfindungsgemäßen Verfahrens verwiesen werden soll; das gleiche gilt für die Weiterbildungen der erfindungsgemäßen Anordnung, die in Unteransprüchen beschrieben sind.

Als Erfindung wird auch eine Chipkarte angesehen, die in einem weiteren nebengeordneten Anspruch beschrieben ist. Diese weist eine erste Datenübertragungseinrichtung auf, die speziell zur Datenkommunikation mit der ersten Leseeinrichtung geeignet ist, und sie weist eine zweite Datenübertragungseinrichtung auf, die speziell zur Datenkommunikation mit der zweiten Leseeinrichtung geeignet ist.

Zur Erläuterung der Erfindung zeigt
Figur 1 ein Ausführungsbeispiel für eine erfindungsgemäße Anordnung, die zum Durchführen des erfindungsgemäßen Verfahrens geeignet ist, und
Figur 2 ein Ausführungsbeispiel für die erfindungsgemäße Chipkarte zum Durchführen des erfindungsgemäßen Verfahrens.

In der Figur ist ein öffentliches Verkehrsmittel 5 dargestellt, das beispielsweise ein Schienenfahrzeug oder ein Bus sein kann. Das Verkehrsmittel 5 weist eine Eingangstür 10 und eine Ausgangstür 15 auf, durch die Fahrgäste das Verkehrsmittel 5 betreten bzw. wieder verlassen können. Im Bereich der Eingangstür 10 ist eine erste Leseeinrichtung 20 mit einer Ausnehmung bzw. Lesemulde 22 angebracht. Diese erste Leseeinrichtung 20 ist über eine Leitung 25 mit einem Anschluß D30A einer Steuereinheit 30 verbunden.

Wesentlich ist an der Leseeinrichtung 20, daß diese die Ausnehmung bzw. Lesemulde 22 aufweist; diese Lesemulde 22 soll derart ausgestaltet sein, daß Chipkarten ausschließlich dann ausgelesen werden, wenn sie in die Lesemulde 22 eingeführt sind; technisch gewährleistet werden kann dies durch die Formgestaltung der Lesemulde 22 und die interne Anordnung der Sende-/Leseantermen der Leseeinrichtung 20. Leseeinrichtungen dieser Art sind beispielsweise im deutschen Gebrauchsmuster 298 15 975.9 und in der unveröffentlichten deutschen Patentanmeldung 198 40 530.8-53 beschrieben. Selbstverständlich können auch andere Arten von Leseeinrichtungen als erste Leseeinrichtung 20 Verwendung finden, beispielsweise solche mit Leseschlitz zum Durchziehen der Chipkarte oder solche ohne Ausnehmung oder Schlitz.

Die Steuereinheit 30 weist einen weiteren Anschluß D30B auf, dem über eine weitere Leitung 35 eine zweite, ebenfalls elektromagnetisch mit Funkwellen arbeitende Leseeinrichtung 40 vorgeordnet ist. Inder Figur ist die zweite Leseeinrichtung 40 durch zwei Lesevorrichtungen 45 und 50 gebildet, die beiderseits der Ausgangstür 15 angebracht sind. Die zwei Lesevorrichtungen 45 und 50 haben im Unterschied zur ersten Leseeinrichtung 20 eine große Reichweite (bis ca. 10 m) und können daher Chipkarten auch dann auslesen, wenn diese einen Abstand im Meterbereich zur Lesevorrichtung 45 bzw. 50 aufweisen; konkret sind die beiden Lesevorrichtungen 45 bzw. 50 hierzu in ihrer Sendeleistung derart dimensioniert, daß zumindest stets eine von ihnen das Passieren der Ausgangstür 15 durch eine nicht dargestellte Chipkarte selbsttätig erfassen und das jeweilige Kartenkennzeichen der Chipkarte auslesen kann.

Die Steuereinheit 30 ist an eine Antenne 60 angeschlossen, über die sie mit einer Zentraleinheit 70 funktechnisch in Verbindung steht. Die Zentraleinheit 70 ist eingangsseitig mit ortsfesten Eingabeeinrichtungen 80 verbunden, von denen der Übersicht halber in der Figur nur eine dargestellt ist.

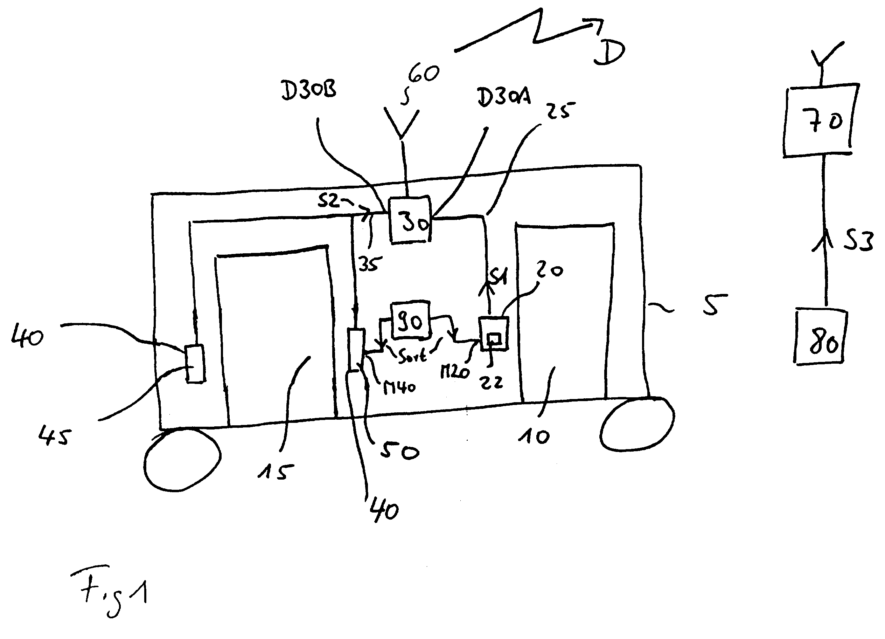

An die beiden Leseeinrichtungen 20 und 40 ist an Meßeingängen M20 bzw. M40 ein Ortungssensor 90 angeschlossen, der ein den jeweiligen Ort des Verkehrsmittels 5 angebendes Ortserfassungssignal Sort an die beiden Leseeinrichtungen 20 und 40 überträgt. In der Figur 1 ist aus Gründen der Übersichtlichkeit lediglich eine einzige Verbindungsleitung zur zweiten Leseeinrichtung 40 dargestellt; es ist jedoch selbstverständlich, daß beide Lesevorrichtungen 45 und 50 mit dem Ortserfassungssignal Sort beaufschlagt werden.

Die Steuereinheit 30 kann im übrigen - wie in der Figur 1 angedeutet - separat von den beiden Leseeinrichtungen 20 und 40 angeordnet sein; sie kann aber statt dessen auch in einer der beiden Leseeinrichtungen 20 bzw. 40 integriert sein.

Die erfindungsgemäße Anordnung läßt sich wie folgt betreiben:

Führt ein Fahrgast nach dem Betreten des Verkehrsmittels 5 - also bei Fahrtbeginn - eine Chipkarte in die Lesemulde 22 der ersten Leseeinrichtung 20 ein, so wird mit dieser mindestens ein auf der Chipkarte abgespeichertes Kartenkennzeichen ausgelesen. Mit diesem Kartenkennzeichen der Chipkarte wird in der ersten Leseeinrichtung 20 ein das Kartenkennzeichen sowie den jeweiligen Ort bei Fahrtbeginn angebendes erstes Ortssignal S1 erzeugt und zur Steuereinheit 30 übertragen; die jeweilige Ortsinformation wird dabei unter Heranziehung des Ortserfassungssignals Sort des Ortungssensors 90 gebildet.

Bei Fahrtende, also dann, wenn der Fahrgast mit seiner Chipkarte die Ausgangstür 15 - also den Ausgangsbereich des Verkehrsmittels 5 - und damit die zweite Leseeinrichtung 40 passiert, wird das Kartenkennzeichen seiner Chipkarte auf elektromagnetischen Wege ein zweites Mal ausgelesen, und zwar von der zweiten Leseeinrichtung 40. Diese bildet ein das Kartenkennzeichen sowie den jeweiligen Ort bei Fahrtende ( = Ankunftsort des Fahrgastes) angebendes zweites Ortssignal S2 und überträgt dieses zur Steuereinheit 30; die jeweilige Ortsinformation wird dabei unter Heranziehung des Ortserfassungssignals Sort des Ortungssensors 90 gebildet.

Mit dem zweiten Ortssignal S2 sowie mit dem ersten Ortssignal S1 wird dann in der Steuereinheit 30 ein Datensignal D gebildet, das die von dem Fahrgast mit dem Verkehrsmittel 5 zurückgelegte Fahrstrecke kennzeichnet. Dieses Datensignal D wird über die mit der Steuereinheit 30 verbundenen Antenne 60 zu der Zentraleinrichtung 70 übertragen. In der Zentraleinrichtung 70 liegt nach Empfang des Datensignals D damit die Information vor, wann der Fahrgast mit der durch das Kartenkennzeichen gekennzeichneten Chipkarte das Verkehrsmittel 5 betreten und wieder verlassen hat. Mit diesen Daten kann in der Zentraleinrichtung 70 das vom Fahrgast zu zahlende Fahrtentgelt berechnet werden und in Form einer Rechnung an den Fahrgast beispielsweise per Post übermittelt werden. Dies setzt natürlich voraus, daß in der Zentraleinrichtung bekannt ist, welche Chipkarten von welchen Fahrgästen benutzt werden.

Eine andere Art der Fahrgelderhebung kann beispielsweise darin bestehen, daß der Fahrpreis bereits in der Steuereinheit 30 berechnet wird und der Fahrpreis durch erneute Datenübertragung zwischen der Chipkarte und der zweiten Leseeinrichtung 40 von der Chipkarte abgebucht wird; dies setzt dann ein entsprechendes Geldguthaben auf der Chipkarte voraus.

Stellt der Fahrgast fest, daß es seiner Ansicht nach zu einem Lesefehler beim Verlassen des Verkehrsmittels 5 gekommen ist, so kann er an der Eingabeeinrichtung 80 nach dem Einführen seiner Chipkarte den Ort eingeben, an dem er das Verkehrsmittel 5 verlassen hat bzw. haben will. Durch Eingabe des Ortes erzeugt der Fahrgast ein drittes Ortssignal S3, das die Kartenkennung seiner Chipkarte sowie den eingegebenen Ort angibt; dieses Ortssignal S3 wird zur Zentraleinheit 70 übertragen. Mit dem Ortssignal S3 sowie dem Datensignal D der Steuereinheit 30 wird in der Zentraleinheit 70 ein weiteres Datensignal - nachfolgend korrigiertes Datensignal genannt - erzeugt, das die vom Fahrgast zurückgelegte Fahrstrecke unter Berücksichtigung des vom ihm als Ort des Fahrtendes eingegebenen Ortes angibt; konkret wird hierzu die im Datensignal D enthaltene Ortsangabe des zweiten Ortssignals ersetzt durch die Ortsangabe des dritten Ortssignals.

Die Eingabeeinrichtung 80 ermöglicht dem Fahrgast also, ein fehlerhaftes Datensignal zu korrigieren, falls dieses nach seiner Ansicht einen falschen Ankunftsort kennzeichnet und zu einem überhöhten Fahrpreis geführt hat.

Um dabei eine mißbräuchliche Korrektur des Ankunftsortes durch den Fahrgast zu unterbinden, wird in der Zentraleinheit 70 jedoch das korrigierte Datensignal in der beschriebenen Weise nur dann erzeugt, wenn die Ortsangabe des Fahrgastes plausibel ist. Um dies zu prüfen, wird mit dem zweiten Ortssignal in der Zentraleinheit ein Ortstoleranzbereich gebildet, der beispielsweise durch eine vorgegebene Anzahl an Haltestationen des Verkehrsmittels 5 festgelegt sein kann; z. B. kann der Ortstoleranzbereich alle Haltestationen umfassen, die maximal 5 Stationen vom geräteseitig detektierten Ort des Fahrtendes (erfaßt durch das zweite Ortssignal S2) entfernt sind.

Wird in der Zentraleinheit 70 festgestellt, daß der vom Fahrgast eingegebene Ort nicht innerhalb dieses Ortstoleranzbereiches liegt, so wird als das korrigierte Datensignal ein Fehlersignal gebildet, das angibt, daß die Fahrtstrecke nicht zweifelsfrei bestimmbar ist.

Wie der Fahrpreis dann in der Zentraleinheit 70 ermittelt wird, ist durch die jeweiligen Beförderungsbedingungen des Verkehrsunternehmens festgelegt.

Die Steuereinheit 30 und die Zentraleinheit 70 können jeweils durch eine entsprechend der obigen Beschreibung programmierte Mikroprozessoranordnung bzw. DV-Anlage gebildet sein.

Gemäß der Darstellung in der Figur 1 wird das erste Ortssignal S1 direkt zur Steuereinheit 30 übertragen; soll auf eine Datenleitung zwischen der ersten Leseeinrichtung 20 und der Steuereinheit 30 verzichtet werden, so ist es statt dessen ebenfalls möglich, daß das erste Ortssignal S1 mit der Leseeinrichtung 20 zu der Chipkarte übertragen und dort abgespeichert wird; dieser Abspeichervorgang würde dann im Rahmen des ersten Lesevorgangs passieren, solange sich also die Chipkarte noch in der Datenverbindung mit der ersten Leseeinrichtung 20 befindet. Die zweite Leseeinrichtung 40 müßte dann zusätzlich zu dem Kartenkennzeichen das abgespeicherte erste Ortssignal S1 von der Chipkarte auslesen und dieses zusammen mit dem von ihr erzeugten zweiten Ortssignal S2 zu der Steuereinheit 30 übertragen. In diesem Fall bietet es sich dann an, daß die Steuereinheit 30 in der zweiten Leseeinrichtung 20 integriert wird, weil dann auf eine zusätzliche separate Datenleitung zwischen der Steuereinheit 30 und der zweiten Leseeinrichtung 20 verzichtet werden kann.

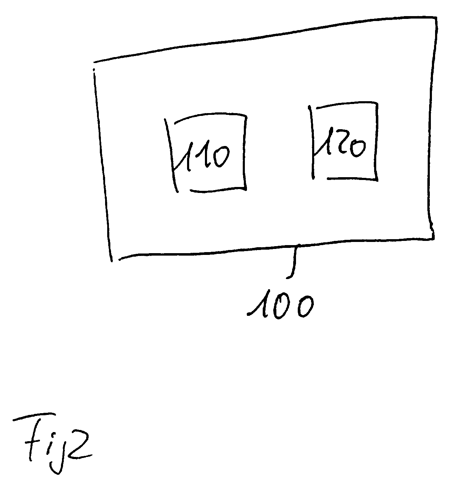

Die Figur 2 zeigt eine Chipkarte 100 zur Verwendung in dem im Zusammenhang mit der Figur 1 beschriebenen Verfahren. Die Chipkarte 100 weist eine erste Datenübertragungseinrichtung 110 auf, die zur Datenkommunikation mit der ersten Leseeinrichtung 20 gemäß Figur 1 geeignet ist. Darüber hinaus weist sie eine zweite Datenübertragungseinrichtung 120 auf, die zur Datenkommunikation mit der zweiten Leseeinrichtung 40 gemäß Figur 1 geeignet ist. Die erste Datenübertragungseinrichtung 110 und die erste Leseeinrichtung 20 gemäß Figur 1 können beispielsweise im "Proximity-Standard" nach ISO-Norm 14443 arbeiten; und die zweite Datenübertragungseinrichtung 120 und die zweite Leseeinrichtung 40 gemäß Figur 1 können beispielsweise im "Vincinity-Standard" nach ISO-Norm Nr. 15693 arbeiten.

Gemäß der Darstellung in der Figur 1 sind die beiden Leseeinrichtungen 20 und 40 im Verkehrsmittel 5 angebracht; es ist darüber hinaus auch möglich, eine der beiden Leseeinrichtungen bzw. beide Leseeinrichtungen im Bahnhofsbereich bzw. an Haltestellen anzubringen (stationäre Anordnung).

## Patentansprüche

1. Verfahren zum Erzeugen eines Datensignals (D), das eine von einem Fahrgast mit einem öffentlichen Verkehrsmittel (5) zurückgelegte Fahrstrecke kennzeichnet, bei dem
- bei Fahrtbeginn mit einer ersten Leseeinrichtung (20) mindestens ein auf einer vom Fahrgast mitgeführten und zum Zwecke des Auslesens bewußt und eigenveranlaßt in eine Datenverbindung mit der Leseeinrichtung (20) gebrachten Chipkarte abgespeichertes Kartenkennzeichen ausgelesen wird und ein den jeweiligen Ort des Verkehrsmittels bei Fahrtbeginn angebendes erstes Ortssignal (S1) erzeugt wird,
- bei Fahrtende ein den jeweiligen Ort des Verkehrsmittels angebendes, zweites Ortssignal (S2) erzeugt wird und
- das Datensignal (D) unter Heranziehung der beiden Ortssignale gebildet wird,
**dadurch gekennzeichnet,** daß
- das zweite Ortssignal (S2) mit einer zweiten Leseeinrichtung (40) selbsttätig und eigeninitiert erzeugt wird, sobald der Fahrgast mit der Chipkarte das Verkehrsmittel (5) verläßt.

2. Verfahren nach Anspruch 1,
**dadurch gekennzeichnet,** daß
- das Verlassen des Verkehrsmittels (5) bei Fahrtende mit einer im Ausgangsbereich des Verkehrsmittels (5) angebrachten, zweiten Leseeinrichtung (40) erfaßt wird, die das zweite Ortssignal (S2) erzeugt, sobald der Fahrgast mit der Chipkarte den Ausgangsbereich passiert.

3. Verfahren nach Anspruch 1,
**dadurch gekennzeichnet,** daß
- der Innenraum des Verkehrsmittels funktechnisch auf das Vorhandensein der mit der ersten Leseeinrichtung erfaßten Chipkarte überwacht wird und
- das zweite Ortssignal (S2) erzeugt wird, sobald das Fehlen der Chipkarte im Innenraum festgestellt wird.

4. Verfahren nach Anspruch 1, 2 oder 3,
**dadurch gekennzeichnet,** daß
- als erste Leseeinrichtung eine Leseeinrichturig (20) mit einer Ausnehmung (22) verwendet wird
- und das auf der Chipkarte abgespeicherte Kartenkennzeichen ausgelesen wird, sobald die Chipkarte vom Fahrgast zum Zwecke des Auslesens in die Ausnehmung (22) der Leseeinrichtung (20) eingeführt worden ist.

5. Verfahren nach einem der vorangehenden Ansprüche,
**dadurch gekennzeichnet,** daß
- ein weiteres Datensignal gebildet wird unter Berücksichtigung eines von einer fahrgastbetätigten Eingabeeinrichtung erzeugten dritten Ortssignals, das den vom Fahrgast als Ort des Fahrtendes bestätigten Ort kennzeichnet, indem
- als das weitere Datensignal ein Signal gebildet wird, das die vom Fahrgast zurückgelegte Fahrstrecke unter Berücksichtigung des vom ihm als Ort des Fahrtendes bestätigten Ortes angibt.

6. Verfahren nach Anspruch 5,
**dadurch gekennzeichnet,** daß
- das weitere Datensignal mit den drei Ortssignalen ermittelt wird, indem
- als das weitere Datensignal ein Signal erzeugt wird, das den Ort des Fahrtbeginns und den vom Fahrgast als Ort des Fahrtendes bestätigten Ort kennzeichnet, sofern der vom Fahrgast als Fahrtende bestätigte Ort innerhalb eines in Abhängigkeit vom zweiten Ortssignal vorgegebenen Ortstoleranzbereiches liegt, und indem
- andernfalls als das weitere Datensignal ein Fehlersignal gebildet wird, das angibt, daß die Fahrtstrecke nicht zweifelsfrei bestimmbar ist.

7. Verfahren nach Anspruch 5,
**dadurch gekennzeichnet,** daß
- bei Ausbleiben des zweiten Ortssignals (S2) das weitere Datensignal mit dem ersten Ortssignal (S1) und dem dritten Ortssignal (S3) gebildet wird.

8. Anordnung zum Erzeugen eines Datensignals (D), das eine von einem Fahrgast mit einem öffentlichen Verkehrsmittel (5) zurückgelegte Fahrstrecke kennzeichnet,
- mit einer ersten Leseeinrichtung (20), die mindestens ein auf einer vom Fahrgast mitgeführten und eigenveranlaßt zum Zwecke des Auslesens bei Fahrtbeginn mit der Leseeinrichtung (20) in eine Datenverbindung gebrachte Chipkarte abgespeichertes Kartenkennzeichen ausliest und ein den Ort des Fahrtbeginns angebendes, erstes Ortssignal (S1) erzeugt,
- mit einer zweiten Leseeinrichtung (40), die bei Fahrtende ein zweites Ortssignal (S2) erzeugt,
- und mit einer zumindest mit der zweiten Leseeinrichtung verbundenen Steuereinheit (30), die unter Heranziehung der beiden Ortssignale (S1, S2) das Datensignal (D) erzeugt,
**dadurch gekennzeichnet,** daß
- die zweite Leseeinrichtung (40) eine Einrichtung ist, die das zweite Ortssignal (S2) selbsttätig und eigeninitiert erzeugt, sobald der Fahrgast das Verkehrsmittel (5) verläßt.

9. Anordnung nach Anspruch 8,
**dadurch gekennzeichnet,** daß
- die erste Leseeinrichtung (20) eine Leseeinrichtung mit einer Ausnehmung (22) ist, die das auf der Chipkarte abgespeicherte Kartenkennzeichen ausliest, sobald die Chipkarte vom Fahrgast zum Zwecke des Auslesens in die Ausnehmung (22) der Leseeinrichtung (20) eingeführt worden ist.

10. Anordnung nach Anspruch 8 oder 9,
**dadurch gekennzeichnet,** daß
- die zweite Leseeinrichtung im Ausgangsbereich des Verkehrsmittels (5) angebracht ist.

11. Anordnung nach Anspruch 10,
**dadurch gekennzeichnet,** daß
die zweite Leseeinrichtung (40) eine Sende-/ und Empfangseinrichtung mit einer Auslesereichweite im Meterbereich aufweist.

12. Anordnung nach Anspruch 8 oder 9,
**dadurch gekennzeichnet,** daß
- die zweite Leseeinrichtung eine im Innenraum des Verkehrsmittels angebrachte Einrichtung ist, die den Innenraum des Verkehrsmittels durchgängig auf das Vorhandensein der mit der ersten Leseeinrichtung erfaßten Chipkarte überwacht und das zweite Ortssignal erzeugt wird, sobald das Fehlen der Chipkarte im Innenraum festgestellt wird.

13. Chipkarte zur Verwendung in einem Verfahren gemäß einem der Ansprüche 1 bis 7,
**dadurch gekennzeichnet,** daß
- sie eine erste Datenübertragungseinrichtung (110) aufweist, die zur Datenkommunikation mit der ersten Leseeinrichtung (20) geeignet ist, und
- daß sie eine zweite Datenübertragungseinrichtung (120) aufweist, die zur Datenkommunikation mit der zweiten Leseeinrichtung (20) geeignet ist.
